# EUROPÄISCHE PATENTSCHRIFT

(11) **EP 2 261 105 B1**
(45) Veröffentlichungstag und Bekanntmachung des Hinweises auf die Patenterteilung: **11.10.2017**
(21) Anmeldenummer: 09161764.7
(22) Anmeldetag: 03.06.2009
(51) Int. Cl.: B62D 33/04, H01R 13/74, B60D 1/64

(54) **Paneel eines Nutzfahrzeugs mit Kupplungseinrichtung**
Panel of a commercial vehicle with coupling device
Panneau d'un véhicule utilitaire doté d'un dispositif d'accouplement

(43) Veröffentlichungstag der Anmeldung: 15.12.2010
(73) Patentinhaber: Schmitz Cargobull AG, 48341 Altenberge (DE)
(72) Erfinder: Beelmann, Dipl.-Ing. Reinhard, 45721 Haltern am See (DE)
(74) Vertreter: Cohausz & Florack

(56) Entgegenhaltungen:
- DE-A1- 10 233 079
- DE-U1- 29 800 542
- US-A1- 2005 212 360
- US-A1- 2007 072 461

## Beschreibung

Die Erfindung betrifft ein Paneel eines Kofferaufbaus eines Nutzfahrzeugs, insbesondere Lastfahrzeugs, Anhängers und/oder Sattelaufliegers, mit einer äußeren Decklage, einer inneren Decklage, einer zwischen der äußeren Decklage und der inneren Decklage angeordneten Kernlage, einem Verbraucher, einer Kupplungseinrichtung und einer den Verbraucher mit der Kupplungseinrichtung verbindenden, zwischen der äußeren Decklage und der inneren Decklage vorgesehenen Leitung, wobei die Kupplungseinrichtung ein Kopfende mit einem von außen zugänglichen Kupplungselement zum Herstellen einer Verbindung mit der Leitung aufweist und wobei die Kupplungseinrichtung ein Fußende aufweist.

Nutzfahrzeuge mit Kofferaufbauten sind seit langem und in unterschiedlichen Ausführungen bekannt. Sie werden durch einzelne Paneele, welche die Seitenwände, die Stirnwand, das Dach und gegebenenfalls die Rückwand bilden, zusammengesetzt. Die einzelnen Paneele weisen eine äußere und eine innere Decklage auf, welche die Außenhaut der Paneele bilden und aus einer dünnen metallischen oder Kunststoffschicht bestehen. Zwischen der äußeren Decklage und der inneren Decklage ist eine sogenannte Kernlage angeordnet, welche in der Regel durch einen geschäumten Kunststoff mit geringer thermischer Leitfähigkeit gebildet wird. Entsprechend ausgebildete Kofferaufbauten sind daher für einen Kühltransport oder Transporte von temperaturempfindlichen Gütern vorgesehen.

Zusätzlich zu dem genannten Schichtaufbau weisen Paneele für Kofferaufbauten von Nutzfahrzeugen bedarfsweise Verbraucher in Form von elektrischen Leuchten auf, die entweder zur Innenraumbeleuchtung oder zur äußeren Konturmarkierung des Nutzfahrzeugs dienen können. Die einzelnen Verbraucher sind über elektrische Leitungen mit einer Kupplungseinrichtung des entsprechenden Paneels verbunden, mit deren Hilfe nach dem Zusammenbau des Kofferaufbaus aus den einzelnen Paneelen die elektrischen Verbraucher des Paneels mit einer zentralen Versorgungseinrichtung in Form einer Spannungsversorgung bzw. eines Bordnetzes verbunden werden können.

Die Verbraucher, die Kupplungseinrichtung und die diese verbindende elektrische Leitung eines Paneels können entweder nachträglich oder vor dem Verbinden der äußeren Decklage, der inneren Decklage und der Kernlage miteinander montiert werden. Problematisch ist es jedoch, wenn die Verbraucher und die Kupplungseinrichtung an unterschiedlichen Decklagen des Paneels vorgesehen werden sollen. Die Verbraucher und die Kupplungseinrichtung müssen in diesem Falle nämlich erst mit den unterschiedlichen Decklagen verbunden werden. Da die Verbraucher und die Kupplungseinrichtung über die elektrische Leitung miteinander verbunden sind, kann dies nicht unabhängig voneinander, sondern erst zu einem Zeitpunkt erfolgen, bei dem die äußere Decklage und die innere Decklage unmittelbar benachbart zueinander angeordnet sind. Dabei sollte sich die Kernlage noch nicht zwischen den äußeren Decklagen befinden, um die Montage der Verbraucher und der Kupplungseinrichtung an den unterschiedlichen Decklagen nicht weiter zu erschweren. Ein Paneel eines Kofferaufbau, von der die Erfindung ausgeht, ist in der gattungsgemäßen DE 102 33 079 A1 beschrieben.

Aufgrund der Größe der Paneele von Kofferaufbauten von Nutzfahrzeugen und der damit verbundenen Größe der äußeren und inneren Decklagen sowie des geringeren Abstands zwischen den Decklagen ist die Montage der Kupplungseinrichtung und der Verbraucher, die über die elektrische Leitung miteinander verbunden sind, sehr aufwendig und zeitintensiv, was zu erhöhten Herstellungskosten der Paneele führt.

Der vorliegenden Erfindung liegt daher die Aufgabe zugrunde, das eingangs genannte und zuvor näher beschriebene Paneel derart auszugestalten und weiterzubilden, dass die Herstellungskosten des Paneels gesenkt werden können.

Diese Aufgabe ist bei einem Paneel mit den Merkmalen des Oberbegriffs von Anspruch 1 dadurch gelöst, dass das Fußende und das Kopfende unterschiedlichen Decklagen zugeordnet sind und dass das Fußende, die Leitung und der Verbraucher an derselben Decklage vormontiert sind.

Die Erfindung beruht folglich auf der Verwendung einer Kupplungseinrichtung mit einem Fußende und einem Kopfende, wobei das Fußende an derselben Decklage vormontiert werden kann wie der wenigstens eine Verbraucher. Dies erlaubt es letztlich, den Verbraucher, die Kupplungseinrichtung und die die Kupplungseinrichtung mit dem Verbraucher verbindende Leitung an ein und derselben Decklage vorzumontieren, auch wenn die Verbindung zwischen einer zentralen Versorgungseinheit, wie etwa eines Bordnetzes, mit der Kupplungseinrichtung von der Seite der gegenüberliegenden Decklage zu erfolgen hat. Bei der Herstellung des Paneels kann demnach die äußere Decklage oder die innere Decklage bereits fertig zusammen mit dem wenigstens einen Verbraucher, der Kupplungseinrichtung und der Leitung, welche den Verbraucher mit der Kupplungseinrichtung verbindet,
vormontiert sein, bevor diese in unmittelbare Nähe zur anderen Decklage bzw. Kernlage gebracht und mit der Kernlage und anderen Decklage zu einem Paneel verbunden wird. Werden bei der Montage des Paneels die beiden Decklagen in einen Abstand zueinander gebracht, der der Dicke des Paneels entspricht, ist die den Verbraucher nicht tragende Decklage dem Kopfende der Kupplungseinrichtung zugeordnet. Insbesondere kommt die Decklage mit dem Kopfende der Kupplungseinrichtung in Anlage. Um die Verbindung zwischen einer zentralen Versorgungseinheit und dem an einer Decklage vormontierten wenigstens einen Verbraucher von der gegenüberliegenden Decklage aus herstellen zu können, weist das Kopfende der Kupplungseinrichtung ein entsprechend ausgebildetes, von außen zugängliches Kupplungselement auf, bei dem es sich um eine Art Verbindungssockel bzw. Steckdose oder dergleichen handeln kann.

Erfindungsgemäß ist es möglich, Paneele mit einem Verbraucher, einer Kupplungseinrichtung und einer den Verbraucher mit der Kupplungseinrichtung verbindenden Leitung auch dann ähnlich wie Paneele ohne Verbraucher zu fertigen, selbst wenn der Verbraucher an einer Decklage montiert und über ein der anderen Decklage zugeordnetes Kupplungselement mit einer zentralen Versorgungseinheit verbunden wird. Zunächst werden beide Decklagen fertig konfiguriert bzw. vormontiert und anschließend unter Einbringung der Kernlage zu einem Paneel verbunden. Der einzige, nennenswerte Unterschied besteht darin, dass zuvor an einer der Decklagen der Verbraucher, die Kupplungseinrichtung und die den Verbraucher mit der Kupplungseinrichtung verbindende Leitung vormontiert werden, bevor die einzelnen Elemente des Paneels zueinander gebracht und miteinander verbunden werden.

Vormontiert bedeutet in diesem Zusammenhang, dass die Montage vor dem Fertigstellen des Paneels als solches aus den einzelnen Lagen erfolgt. Nach dem Zusammenbau des Paneels kann der Verbraucher auch von der Kernlage und/oder der anderen Decklage getragen werden, er ist aber dennoch vorzugsweise an der Decklage befestigt, an der der Verbraucher vormontiert wurde. Es versteht sich dabei, dass der Verbraucher auf verschiedene an sich bekannte Weisen an der Decklage, vorzugsweise dessen Innenseite bezogen auf das Paneel, vormontiert werden kann. Vorzugsweise wird der Verbraucher, insbesondere wenn es sich um eine Leuchte oder dergleichen handelt, in einer Öffnung bzw. Aussparung des Decklage vormontiert.

Die vorliegende Erfindung ist nicht auf einen einzelnen Verbraucher beschränkt. Die Kupplungseinrichtung kann auch an derselben Decklage vormontiert sein wie eine Mehrzahl von Verbrauchern des entsprechenden Paneels, die dann vorzugsweise über eine gemeinsame Leitung mit der Kupplungseinrichtung verbunden sind. Dies ist insbesondere dann der Fall, wenn es sich bei den Verbrauchern um elektrische Leuchten einer Beleuchtungseinrichtung, wie etwa einer seitlichen Konturmarkierung, handelt.

Es ist jedoch nicht erforderlich, dass es sich bei dem Verbraucher oder den Verbrauchern um einen bzw. mehrere elektrische Verbraucher handelt. Als Verbraucher kommen ebenso pneumatische oder hydraulische Verbraucher, etwa in Form von pneumatischen oder hydraulischen Antriebseinrichtungen, in Frage. In diesen Fällen stellt die zentrale Versorgungseinrichtung keine Spannungsversorgung, sondern eine pneumatische oder hydraulische Versorgungseinrichtung, etwa in Form eines Kompressors oder einer Pumpe, dar.

Grundsätzlich kann der oder können die Verbraucher auch über mehrere Leitungen mit einer oder mehreren Kupplungseinrichtungen des entsprechenden Paneels verbunden sein. In all diesen Fällen wird von den erfindungsgemäßen Vorteilen Gebrauch gemacht.

Das Kupplungselement kann vorzugsweise als Sockel ausgebildet sein, in den ein korrespondierender Stecker eingeführt werden kann. Auf diese Weise kann beispielsweise erreicht werden, dass die Kupplungseinrichtung bzw. das Kupplungselement nicht gegenüber der ihr zugeordneten Decklage nach außen übersteht.

Bei einer ersten Ausgestaltung des Paneels ist vorgesehen, dass der wenigstens eine Verbraucher und das Fußende der Kupplungseinrichtung an der äußeren Decklage vormontiert sind. Auf diese Weise kann der Verbraucher der Außenseite des späteren Kofferaufbaus des Nutzfahrzeugs zugeordnet werden. Als Verbraucher kommen in diesem Zusammenhang insbesondere Leuchten einer Konturmarkierung in Frage.

Dass die Verbraucher und das Fußende an der äußeren Decklage vormontiert sind, hat den weiteren Vorteil, dass das Kupplungselement der inneren Decklage zugeordnet und daher besser gegen Verschmutzung und Nässe geschützt ist. Außerdem wird sichergestellt, dass eine Verbindung zwischen dem Kupplungselement und der zentralen Versorgungseinheit nicht über die Außenkontur des Kofferaufbaus vorsteht.

Der besseren Verständlichkeit halber wird bei den weiteren Ausführungen davon ausgegangen, dass das Fußende der Kupplungseinrichtung und der wenigstens eine Verbraucher an der äußeren Decklage vormontiert sind. Es verstehet sich, dass das Fußende der Kupplungseinrichtung und der wenigstens eine Verbraucher alternativ stets auch an der inneren Decklage vormontiert sein könnten, ohne dass dies jeweils im Einzelnen einer expliziten Erwähnung bedarf. Das Kupplungselement wäre dann der äußeren Decklage zugeordnet.

Funktional und effektiv bei der Herstellung ist es, wenn das Kupplungselement durch eine Öffnung in der inneren Decklage zugänglich ist. Die Öffnung kann dabei vorzugsweise bereits vor dem eigentlichen Zusammenbau des Paneels in der inneren Decklage vorgesehen werden. Auf diese Weise ist sichergestellt, dass das Kupplungselement des Kopfendes der Kupplungseinrichtung von der Seite der inneren Decklage bzw. des Innenraums des Kofferaufbaus einfach zugänglich und problemlos mit einem entsprechend korrespondierend ausgebildeten Kupplungselement mit einer zentralen Versorgungseinheit, wie etwa einem Bordnetz, verbunden werden kann.

In diesem Zusammenhang bietet es sich an, wenn das Kopfende der Kupplungseinrichtung zur Abdichtung der Kernlage des Paneels an einem umlaufend zur Öffnung vorgesehenen Dichtelement anliegt. Auf diese Weise wird vermieden, dass Schmutz oder Feuchtigkeit durch die innere Decklage in die Kernlage eindringen kann.

Wenn die äußere Decklage und das Fußende der Kupplungseinrichtung zur Positionierung des Fußendes in Bezug auf die äußere Decklage abschnittsweise ineinandergreifende Positionierungsmittel aufweisen, lässt sich sicherstellen, dass die Kupplungseinrichtung an der geeigneten Stelle an der äußeren Decklage vormontiert wird. Ist dies der Fall, ist sichergestellt, dass beim Zusammenbau des Paneels das Kopfende der Kupplungseinrichtung in vorbestimmter Weise gegenüber der inneren Decklage des Paneels ausgerichtet ist. Die Montage des Paneels kann alternativ oder zusätzlich weiter dadurch vereinfacht werden, dass das Fußende und das Kopfende der Kupplungseinrichtung über einen flexiblen Abschnitt zur Anpassung des Abstands zwischen dem Fußende und dem Kopfende an den Abstand zwischen der äußeren Decklage und der inneren Decklage miteinander verbunden sind. Durch den flexiblen Abschnitt ist der Abstand zwischen dem Fußende und dem Kopfende der Kupplungseinrichtung nicht fest vorgegeben, sondern in gewissen Grenzen variabel ausgebildet. Diese Variabilität erlaubt es, beispielsweise Bauteiltoleranzen oder Ungenauigkeiten bei der Fertigung auszugleichen. Besonders bevorzugt ist es jedoch, wenn der flexible Abschnitt derart ausgebildet ist, dass identische Kupplungseinrichtungen in Paneele mit unterschiedlichen Paneeldicken verbaut werden können. Die Kupplungseinrichtungen sind dann beispielsweise universell einsetzbar, so dass keine unterschiedlichen Kupplungseinrichtungen hergestellt und bevorratet werden müssen, wenn Paneele in unterschiedlichen Paneeldicken gefertigt werden. Ferner können Verwechslungen unterschiedlicher Kupplungseinrichtungen vermieden werden.

Um sicherzustellen, dass die Funktionalität der Kupplungseinrichtung trotz entsprechender, zuvor beschriebener Abweichungen hinsichtlich des Abstands zwischen der äußeren Decklage und der inneren Decklage gewährleistet ist, insbesondere dass das Kopfende zur Abdichtung der Kernlage an der inneren Decklage anliegt, ist vorgesehen, dass der flexible Abschnitt im montierten Zustand gestaucht ist.

Dabei übt der gestauchte flexible Abschnitt vorzugsweise eine Rückstellkraft auf das Kopfende in Richtung der inneren Decklage aus. Es kommt also vorzugsweise zu einer entsprechenden Anbindung zwischen der inneren Decklage und dem Kopfende der Kupplungseinrichtung. Insbesondere kommt es in diesem Zusammenhang zu einer Abdichtung zwischen dem Kopfende und der inneren Decklage. Dabei kann der gestauchte flexible Abschnitt eine Rückstellkraft auf das Kopfende in Richtung des umlaufend um die Öffnung der inneren Decklage vorgesehenen Dichtelements ausüben.

Der flexible Abschnitt zwischen dem Fußende und dem Kopfende der Kupplungseinrichtung kann konstruktiv einfach dadurch erreicht werden, dass das Fußende und das Kopfende der Kupplungseinrichtung über wenigstens zwei Arme miteinander verbunden sind. Die wenigstens zwei Arme sind dabei in ihrer Anordnung in gewisser Weise flexibel, wodurch der Abstand zwischen dem Fußende und dem Kopfende der Kupplungseinrichtung veränderbar ist. In diesem Fall aber auch sonst kann es bevorzugt sein, wenn die Kupplungseinrichtung aus Kunststoff, vorzugsweise einstückig, gefertigt ist. Dies erlaubt es, komplexere Strukturen einfach und kostengünstig herzustellen.

Dabei ist es bevorzugt, wenn jeder Arm einen Gelenkabschnitt aufweist, jeder Gelenkabschnitt über einen fußseitigen Schenkel des jeweiligen Arms mit dem Fußende und über einen kopfseitigen Schenkel des jeweiligen Arms mit dem Kopfende verbunden ist. Auf diese Weise kann der Abstand zwischen dem Kopfende und dem Fußende der Kupplungseinrichtung in einfacher Weise dadurch verringert werden, dass die wenigstens zwei Arme an ihren Gelenkabschnitten einknicken, so dass die beiden Schenkel der jeweiligen Arme während der Abstandsverringerung zwischen dem Kopfende und dem Fußende aufeinander zu geschwenkt werden.

Hinsichtlich einer einfachen und kostengünstigen Ausgestaltung der flexiblen Abschnitte kann vorgesehen sein, dass der Gelenkabschnitt als Scharnier, vorzugsweise Filmscharnier, ausgebildet ist.

Eine geeignete Anbindung des Kopfendes der Kupplungseinrichtung an die innere Decklage kann bedarfsweise dadurch erreicht werden, dass das Kopfende an einem mit der inneren Decklage verbundenen Fitting anliegt. Um darüber hinaus eine Abdichtung zwischen dem Kopfende der Kupplungseinrichtung und der inneren Decklage bzw. des mit der inneren Decklage verbundenen Fittings zu erreichen, kann vorgesehen sein, dass das Kopfende an einem Dichtelement des Fittings anliegt.

Darüber hinaus kann der Fitting zur Positionierung des Kopfendes gegenüber der inneren Decklage genutzt werden. Geringe Fehlertoleranzen oder Ungenauigkeiten bei der Montage können auf diese Weise ausgeglichen werden. Das Kopfende und der Fitting können dazu abschnittsweise ineinandergreifende Positionierungsmittel aufweisen. Diese Positionierungsmittel dienen der Positionierung des Kopfendes in Bezug auf den Fitting.

Unabhängig von der Ausgestaltung des Fittings kann zu dessen einfacher Montage vorgesehen sein, dass der Fitting von der Innenseite des Paneels an der inneren Decklage vormontiert ist. Eine einfache Verbindung zwischen dem Fitting und der inneren Decklage wird beispielsweise dadurch erzielt, dass der Fitting mit der inneren Decklage verrastet und/oder verklebt ist.

Alternativ oder zusätzlich kann die Montage des Paneels dadurch vereinfacht werden, dass das Fußende mit der äußeren Decklage verklebt ist. Dies ist schnell und ohne umständliche Handgriffe durchführbar.

Bedarfsweise betrifft die Erfindung auch einen Kofferaufbau eines Nutzfahrzeugs, welches wenigstens ein Paneel der vorgenannten Art und bedarfsweise eine zentrale Versorgungseinrichtung zur Versorgung des wenigstens einen Verbrauchers umfasst.

Nachfolgend wird die Erfindung anhand einer lediglich ein Ausführungsbeispiel darstellenden Zeichnung näher erläutert. In der Zeichnung zeigt:
- Fig. 1: ein Nutzfahrzeug mit einem Kofferaufbau mit einem erfindungsgemäßen Paneel,
- Fig. 2: das erfindungsgemäße Paneel aus Fig. 1 in einer Detaildarstellung und
- Fig. 3: ein Detail des Paneels aus Fig. 2 in einer Schnittdarstellung gemäß der Ebene III-III aus Fig. 2.

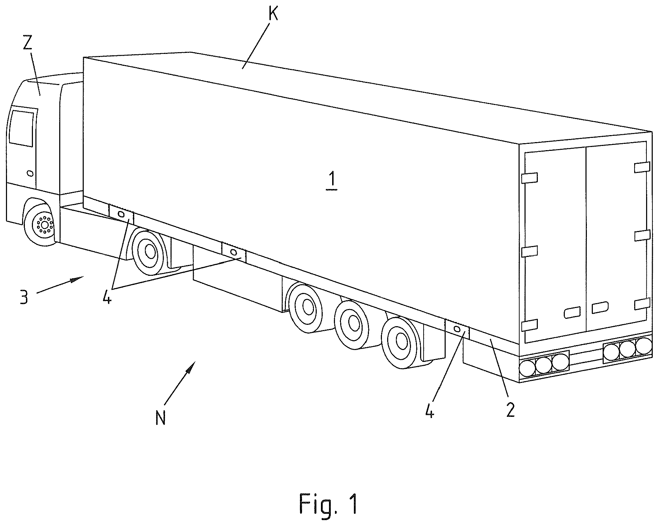

In der Fig. 1 ist ein Kofferaufbau K eines Nutzfahrzeugs N in Form eines Sattelaufliegers dargestellt, wobei der Sattelauflieger mit einem Zugfahrzeug Z verbunden ist. Der Kofferaufbau umfasst ein Paneel 1 in Form eines Seitenwandpaneels, das an seinem unteren Rand 2 Verbraucher 3 in Form von elektrischen Leuchten 4 einer Beleuchtungseinrichtung zur Konturmarkierung des Nutzfahrzeugs N aufweist.

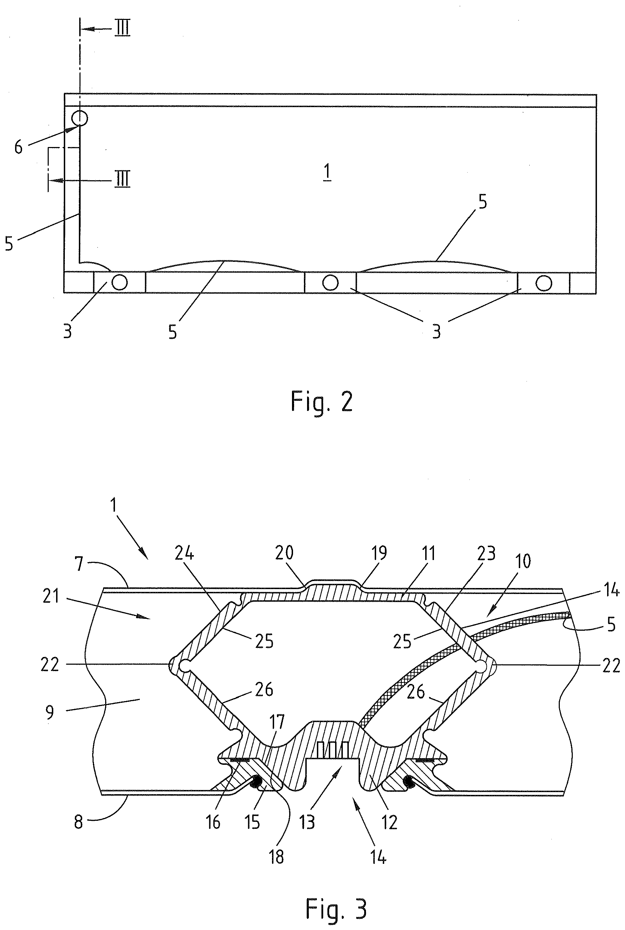

Das Paneel 1 des Kofferaufbaus K aus Fig. 1 ist in einer schematischen Detailansicht in der Fig. 2 dargestellt. Die am unteren Rand 2 des Paneels 1 angeordneten und dort vormontierten Verbraucher 3 sind über eine Leitung 5 mit einer Kupplungseinrichtung 6 verbunden, die in einem oberen Eckbereich des Paneels 1 angeordnet ist.

Eine Schnittansicht dieses oberen Eckbereichs des Paneels 1 ist in der Fig. 3 dargestellt. Entsprechend der Darstellung der Fig. 3 weist das Paneel 1 eine äußere Decklage 7 und eine innere Decklage 8 auf, die als metallische Bleche ausgebildet sind. Zwischen der äußeren Decklage 8 und der inneren Decklage 7 ist eine Kernlage 9 in Form eines geschäumten Kunststoffes vorgesehen. Die Verbraucher 3 sind über eine Leitung 5 mit der in Schnittansicht dargestellten Kupplungseinrichtung 10 verbunden. Die Kupplungseinrichtung 10 weist ein Fußende 11 und ein Kopfende 12 auf, wobei das Kopfende 12 ein Kupplungselement 13 in Form eines Sockels umfasst, in das ein korrespondierender Stecker zur Verbindung der Verbraucher 3 mit einem elektrischen Bordnetz des Nutzfahrzeugs N verbunden werden kann.

Um die Zugänglichkeit des Kupplungselements 13 von der Seite der inneren Decklage 8 zu gewährleisten, ist in die innere Decklage 8 eine entsprechende Öffnung 14 eingebracht. Zur Stabilisierung des Öffnungsbereichs ist umlaufend zu der Öffnung 14 ein Fitting 15 vorgesehen, der von innen in die Öffnung 14 eingreift und mit der inneren Decklage 8 verklebt ist. Der Fitting 15 ist von der Innenseite des Paneels 1 montiert und ragt im dargestellten Ausführungsbeispiel nicht gegenüber der inneren Decklage 8 nach außen hervor. Der Fitting 15 ist einerseits in der Öffnung 14 der inneren Decklage 8 verrastet und andererseits mit der inneren Decklage 8 verklebt. Über den Fitting 15 wird ein Dichtelement 16 mit einer Dichtfläche bereitgestellt, an dem das Kopfende 12 der Kupplungseinrichtung 10 zwecks Abdichtung gegenüber der Kernlage 9 anliegt.

Der Fitting 15 und das Kopfende 12 der Kupplungseinrichtung 10 weisen korrespondierende sich verjüngende Flächen 17,18 auf, die einer Positionierung des Kopfendes 12 beim Einführen desselben in den Fitting 15 dienen. Beim Einführen des Kopfendes 12 in den Fitting 15 kommt es letztlich zu einer Selbstzentrierung des Kopfendes 12 der Kupplungseinrichtung 10 gegenüber dem Fitting 15 in der Ebene der inneren Decklage 8.

Die Kupplungseinrichtung 10 ist mit ihrem Fußende 11 an der äußeren Decklage 7 durch Verkleben vormontiert bzw. festgelegt. Dazu weist die äußere Decklage 7 und das Fußende 11 der Kupplungseinrichtung 10 korrespondierende, abschnittsweise ineinandergreifende Positionierungsmittel 19,20 auf. Diese Positionierungsmittel 19,20 sind in Bezug auf die äußere Decklage 7 als Vertiefung und in Bezug auf das Fußende 11 der Kupplungseinrichtung 10 als Vorsprung ausgebildet. Dabei passt der Vorsprung des Fußendes 11 der Kupplungseinrichtung 10 mehr oder weniger exakt in die Vertiefung der äußeren Decklage 7. Auf diese Weise wird eine Positionierung der Kupplungseinrichtung 10 bereitgestellt, ohne dass die innere Decklage 8 zur Positionierung der Kupplungseinrichtung 10 in Bezug auf die äußere Decklage 7 erforderlich wäre.

Das Fußende 11 der Kupplungseinrichtung 10 ist mit dem Kopfende 12 der Kupplungseinrichtung 10 über einen flexiblen Abschnitt 21 verbunden. Dieser flexible Abschnitt 21 besteht im dargestellten Ausführungsbeispiel aus zwei jeweils einen Gelenkabschnitt 22 aufweisenden Armen 23,24. Die Gelenkabschnitte 22 der Arme 23,24 sind als Filmscharniere ausgebildet und sind wie der flexible Abschnitt 21 bzw. die Kupplungseinrichtung 10 gestaucht. Das bedeutet, dass das Fußende 11 und das Kopfende 12 der Kupplungseinrichtung 10 auch einen größeren Abstand zueinander einnehmen könnten. Demzufolge übt der flexible Abschnitt 21 eine Rückstellkraft auf das Kopfende 12 der Kupplungseinrichtung 10 aus, welche das Kopfende 12 der Kupplungseinrichtung 10 in Richtung der inneren Decklage 8 drückt.

Jeder Gelenkabschnitt 22 ist über einen fußseitigen Schenkel 25 mit dem Fußende 11 der Kupplungseinrichtung 10 und über einen kopfseitigen Schenkel 26 mit dem Kopfende 12 der Kupplungseinrichtung 10 verbunden. Dabei sind die fußseitigen und kopfseitigen Schenkel 25,26 eines jeden Arms 23,24 so lang ausgebildet, dass der flexible Abschnitt 21 nicht nur Bauteiltoleranzen und Ungenauigkeiten bei der Fertigung der Paneele 1, die sich auf den Abstand zwischen der äußeren Decklage 7 und der inneren Decklage 8 auswirken, sondern auch Dickenunterschiede unterschiedlicher standardisierter Paneele ausgleichen kann. Für die Herstellung von dickeren oder dünneren Paneelen kann in gleicher Weise die in der Fig. 3 dargestellte Kupplungseinrichtung 10 Verwendung finden.

Die in der Fig. 3 dargestellte Kupplungseinrichtung 10 erlaubt es infolge der Abdichtung des Zwischenraums zwischen der äußeren Decklage 7 und der inneren Decklage 8, insbesondere die innere Decklage 8 und die äußere Decklage 7 in der in der Fig. 3 dargestellten Weise zusammenzubringen und erst anschließend ein Ausschäumen des Zwischenraums zwischen der äußeren Decklage 7 und der inneren Decklage 8 durchzuführen. Dies ist zweckmäßig, da die Leitung 5 zwischen der Kupplungseinrichtung 10 und dem ebenfalls an der äußeren Decklage 7 vormontierten Verbraucher 3 das Ausschäumen des Zwischenraums zwischen der äußeren Decklage 7 und der inneren Decklage 8 nicht nennenswert stört. Der geschäumte Kunststoff wird vielmehr alle freibleibenden Zwischenräume füllen.

## Patentansprüche

1. Paneel (1) eines Kofferaufbaus eines Nutzfahrzeugs (N), insbesondere Lastfahrzeugs, Anhängers und/oder Sattelaufliegers,
- mit einer äußeren Decklage (7), einer inneren Decklage (8), einer zwischen der äußeren Decklage (7) und der inneren Decklage (8) angeordneten Kernlage (9), einem Verbraucher (3), einer Kupplungseinrichtung (10) und einer den Verbraucher (3) mit der Kupplungseinrichtung (10) verbindenden, zwischen der äußeren Decklage (7) und der inneren Decklage (8) vorgesehenen Leitung (5),
- wobei die Kupplungseinrichtung (10) ein Kopfende (12) mit einem von außen zugänglichen Kupplungselement (13) zum Herstellen einer Verbindung mit der Leitung (5) aufweist und
- wobei die Kupplungseinrichtung (10) ein Fußende (11) aufweist,
**dadurch gekennzeichnet,**
- **dass** das Fußende (11) und das Kopfende (12) unterschiedlichen Decklagen (7,8) zugeordnet sind und
- **dass** das Fußende (11), die Leitung (5) und der Verbraucher (3) an derselben Decklage (7) vormontiert sind.

2. Paneel nach Anspruch 1,
**dadurch gekennzeichnet, dass** der Verbraucher (3) und das Fußende (11) an der äußeren Decklage (7) vormontiert sind.

3. Paneel nach Anspruch 1 oder 2,
**dadurch gekennzeichnet, dass** das Kupplungselement (13) durch eine Öffnung (14) in der inneren Decklage (8) zugänglich ist.

4. Paneel nach Anspruch 3,
**dadurch gekennzeichnet**, d a s s das Kopfende (12) zur Abdichtung der Kernlage (9) an einem umlaufend zur Öffnung (14) vorgesehenen Dichtelement (16) anliegt.

5. Paneel nach einem der Ansprüche 1 bis 4,
**dadurch gekennzeichnet, dass** die äußere Decklage (7) und das Fußende (11) zur Positionierung des Fußendes (11) in Bezug auf die äußere Decklage (7) abschnittsweise ineinandergreifende Positionierungsmittel (19,20) aufweisen.

6. Paneel nach einem der Ansprüche 1 bis 5,
**dadurch gekennzeichnet, dass** das Fußende (11) und das Kopfende (12) über einen flexiblen Abschnitt (21) zur Anpassung des Abstands zwischen dem Fußende (11) und dem Kopfende (12) an den Abstand zwischen der äußeren Decklage (7) und der inneren Decklage (8) miteinander verbunden sind.

7. Paneel nach Anspruch 6,
**dadurch gekennzeichnet, dass** der flexible Abschnitt (21) gestaucht ist.

8. Paneel nach Anspruch 7,
**dadurch gekennzeichnet**, d a s s der gestauchte flexible Abschnitt (21) eine Rückstellkraft auf das Kopfende (12) in Richtung der inneren Decklage (8), vorzugsweise des Dichtelements (16), ausübt.

9. Paneel nach einem der Ansprüche 1 bis 8,
**dadurch gekennzeichnet, dass** das Fußende (11) und das Kopfende (12) der Kupplungseinrichtung (10) über wenigstens zwei Arme (23,24) miteinander verbunden sind.

10. Paneel nach Anspruch 9,
**dadurch gekennzeichnet, dass** jeder Arm (23,24) einen Gelenkabschnitt (22) aufweist, dass jeder Gelenkabschnitt (22) über einen fußseitigen Schenkel (25) des jeweiligen Arms (23,24) mit dem Fußende (11) und über einen kopfseitigen Schenkel (26) des jeweiligen Arms (23,24) mit dem Kopfende (12) verbunden ist.

11. Paneel nach Anspruch 10,
**dadurch gekennzeichnet, dass** jeder der Gelenkabschnitte (22) als Scharnier, vorzugsweise Filmscharnier, ausgebildet ist.

12. Paneel nach einem der Ansprüche 2 bis 11,
**dadurch gekennzeichnet, dass** das Kopfende (12) an einem mit der inneren Decklage (8) verbundenen Fitting (15), vorzugsweise einem Dichtelement (16) des Fittings (15), anliegt.

13. Paneel nach Anspruch 12,
**dadurch gekennzeichnet, dass** das Kopfende (12) und der Fitting (15) zur Positionierung des Kopfendes (12) in Bezug auf den Fitting (15) abschnittsweise ineinandergreifende Positionierungsmittel (17,18) aufweisen.

14. Paneel nach Anspruch 12 oder 13,
**dadurch gekennzeichnet, dass** der Fitting (15) von der Innenseite des Paneels (1) an der inneren Decklage (8) vormontiert, vorzugsweise verrastet und/oder verklebt, ist.

15. Paneel nach einem der Ansprüche 2 bis 14,
**dadurch gekennzeichnet, dass** das Fußende (11) mit der äußeren Decklage (7) verklebt ist.

## Claims

1. Panel (1) of a box body of a commercial vehicle (N), in particular a truck, a trailer and/or semitrailer,
- having an outer covering layer (7), an inner covering layer (8), a core layer (9) which is arranged between the outer covering layer (7) and the inner covering layer (8), a load (3), a coupling device (10) and a line (5) which connects the load (3) to the coupling device (10) and which is provided between the outer covering layer (7) and the inner covering layer (8),
- wherein the coupling device (10) has a head end (12) with a coupling element (13) which is accessible from the outer side for producing a connection to the line (5), and
- wherein the coupling device (10) has a foot end (11), **characterised in that**
- the foot end (11) and the head end (12) are assigned to different covering layers (7, 8), and
- **in that** the foot end (11), the line (5) and the load (3) are preassembled on the same covering layer (7).

2. Panel according to claim 1, **characterised in that** the load (3) and the foot end (11) are preassembled on the outer covering layer (7).

3. Panel according to claim 1 or 2, **characterised in that** the coupling element (13) is accessible through an opening (14) in the inner covering layer (8).

4. Panel according to claim 3, **characterised in that** the head end (12) for sealing the core layer (9) is in abutment with a sealing element (16) which is provided circumferentially with respect to the opening (14).

5. Panel according to any one of claims 1 to 4, **characterised in that** the outer covering layer (7) and the foot end (11) have positioning means (19, 20) which partially engage one in the other for positioning the foot end (11) with respect to the outer covering layer (7).

6. Panel according to any one of claims 1 to 5, **characterised in that** the foot end (11) and the head end (12) are connected to each other by means of a flexible section (21) for adjusting the distance between the foot end (11) and the head end (12) to the spacing between the outer covering layer (7) and the inner covering layer (8).

7. Panel according to claim 6, **characterised in that** the flexible section (21) is compressed.

8. Panel according to claim 7, **characterised in that** the compressed flexible section (21) applies a restoring force to the head end (12) in the direction of the inner covering layer (8), preferably of the sealing element (16).

9. Panel according to any one of claims 1 to 8, **characterised in that** the foot end (11) and the head end (12) of the coupling device (10) are connected to each other by means of at least two arms (23, 24).

10. Panel according to claim 9, **characterised in that** each arm (23, 24) has an articulation section (22), **in that** each articulation section (22) is connected by means of a foot end articulated joint (25) of the respective arm (23, 24) to the foot end (11) and by means of a head end articulated joint (26) of the respective arm (23, 24) to the head end (12).

11. Panel according to claim 10, **characterised in that** each of the articulation portions (22) is constructed as a hinge, preferably an integral hinge.

12. Panel according to any one of claims 2 to 11, **characterised in that** the head end (12) is in abutment with a fitting (15) which is connected to the inner covering layer (8), preferably a sealing element (16) of the fitting (15).

13. Panel according to claim 12, **characterised in that** the head end (12) and the fitting (15) have positioning means (17, 18) which partially engage one in the other for positioning the head end (12) with respect to the fitting (15).

14. Panel according to claim 12 or 13, **characterised in that** the fitting (15) from the inner side of the panel (1) is pre-assembled, preferably locked and/or adhesively bonded, on the inner covering layer (8).

15. Panel according to any one of claims 2 to 14, **characterised in that** the foot end (11) is adhesively bonded to the outer covering layer (7).

## Revendications

1. Panneau (1) d'une structure de coffre d'un véhicule utilitaire (N), en particulier d'un camion, d'une remorque ou d'un semi-remorque,
- avec une couche de finition extérieure (7), une couche de finition intérieure (8), une âme centrale (9) agencée entre la couche de finition extérieure (7) et la couche de finition intérieure (8), un consommateur (3), un dispositif d'accouplement (10) et une conduite (5) reliant le consommateur (3) au dispositif d'accouplement (10), prévue entre la couche de finition extérieure (7) et la couche de finition intérieure (8),
- où le dispositif d'accouplement (10) présente une extrémité de tête (12) avec un élément d'accouplement (13) accessible de l'extérieur afin d'établir une liaison avec la conduite (5), et
- où le dispositif d'accouplement (10) présente une extrémité de pied (11), **caractérisé en ce que**
- l'extrémité de pied (11) et l'extrémité de tête (12) sont associées à différentes couches de finition (7, 8) et
- l'extrémité de pied (11), la conduite (5) et le consommateur (3) sont prémontés sur la même couche de finition (7).

2. Panneau selon la revendication 1,
**caractérisé en ce que** le consommateur (3) et l'extrémité de pied (11) sont prémontés sur la couche de finition extérieure (7).

3. Panneau selon la revendication 1 ou 2,
**caractérisé en ce que** l'élément d'accouplement (13) est accessible par l'intermédiaire d'une ouverture (14) dans la couche de finition intérieure (8).

4. Panneau selon la revendication 3,
**caractérisé en ce que** l'extrémité de tête (12) repose, pour assurer l'étanchéité de l'âme centrale (9), contre un élément d'étanchéité (16) prévu de manière périphérique par rapport à l'ouverture (14).

5. Panneau selon une des revendications de 1 à 4,
**caractérisé en ce que** la couche de finition extérieure (7) et l'extrémité de pied (11) présentent, pour le positionnement de l'extrémité de pied (11), en ce qui concerne la couche de finition extérieure (7), des moyens de positionnement (19, 20) entrant en prise entre eux par section.

6. Panneau selon une des revendications de 1 à 5,
**caractérisé en ce que** l'extrémité de pied (11) et l'extrémité de tête (12) sont reliées l'une à l'autre par l'intermédiaire d'une section souple (21) pour l'ajustement de la distance entre l'extrémité de pied (11) et l'extrémité de tête (12) sur la distance entre la couche de finition extérieure (7) et la couche de finition intérieure (8).

7. Panneau selon la revendication 6,
**caractérisé en ce que** la section souple (21) est comprimée.

8. Panneau selon la revendication 7,
**caractérisé en ce que** la section souple (21) comprimée exerce une force de rappel sur l'extrémité de tête (12) en direction de la couche de finition intérieure (8), de préférence de l'élément d'étanchéité (16).

9. Panneau selon une des revendications de 1 à 8,
**caractérisé en ce que** l'extrémité de pied (11) et l'extrémité de tête (12) du dispositif d'accouplement (10) sont reliées l'une à l'autre par l'intermédiaire d'au moins deux bras (23, 24).

10. Panneau selon la revendication 9,
**caractérisé en ce que** chaque bras (23, 24) présente une section articulée (22), que chaque section articulée (22) est reliée, par l'intermédiaire d'une branche côté pied (25) du bras respectif (23, 24), à l'extrémité de pied (11) et, par l'intermédiaire d'une branche côté tête (26) du bras respectif (23, 24) à l'extrémité de tête (12).

11. Panneau selon la revendication 10,
**caractérisé en ce que** chacune des sections articulées (22) est conçue en tant que charnière, de préférence en tant que charnière-film.

12. Panneau selon une des revendications de 2 à 11,
**caractérisé en ce que** l'extrémité de tête (12) repose contre un raccord (15) relié à la couche de finition intérieure (8), de préférence contre un élément d'étanchéité (16) du raccord (15).

13. Panneau selon la revendication 12,
**caractérisé en ce que** l'extrémité de tête (12) et le raccord (15) présentent, pour le positionnement de l'extrémité de tête (12), en ce qui concerne le raccord (15), des moyens de positionnement (17, 18) entrant en prise entre eux par section.

14. Panneau selon la revendication 12 ou 13,
**caractérisé en ce que** le raccord (15) est prémonté, à partir du côté intérieur du panneau (1), sur la couche de finition intérieure (8), de préférence il est encliqueté et/ou collé.

15. Panneau selon une des revendications de 2 à 14,
**caractérisé en ce que** l'extrémité de pied (11) est collée à la couche de finition extérieure (7).
